(19) Europäisches Patentamt
European Patent Office
Office européen des brevets

(11) **EP 3 672 179 B1**

(12) **EUROPEAN PATENT SPECIFICATION**

(45) Date of publication and mention
of the grant of the patent:
**20.12.2023 Bulletin 2023/51**

(21) Application number: **18845653.7**

(22) Date of filing: **17.08.2018**

(51) International Patent Classification (IPC):
*G01S 5/06* (2006.01)  *G01S 5/02* (2010.01)
*H04W 64/00* (2009.01)  *H04L 27/26* (2006.01)

(52) Cooperative Patent Classification (CPC):
**H04L 27/2663; G01S 5/02213; H04W 64/003;**
G01S 5/06; H04L 27/2675

(86) International application number:
**PCT/CN2018/101050**

(87) International publication number:
**WO 2019/034145 (21.02.2019 Gazette 2019/08)**

(54) **METHOD AND DEVICE FOR MEASURING TIME DIFFERENCE OF ARRIVAL OF FIRST PATH**

VERFAHREN UND VORRICHTUNG ZUR MESSUNG DER ANKUNFTSZEITDIFFERENZ EINES ERSTEN WEGES

PROCÉDÉ ET DISPOSITIF DE MESURE DE DIFFÉRENCE DE TEMPS D'ARRIVÉE D'UN PREMIER CHEMIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.08.2017 CN 201710713045**

(43) Date of publication of application:
**24.06.2020 Bulletin 2020/26**

(73) Proprietor: ZTE Corporation
**Shenzhen, Guangdong 518057 (CN)**

(72) Inventors:
• **CHEN, Shijun**
**Shenzhen**
**Guangdong 518057 (CN)**
• **WANG, Yuanyuan**
**Shenzhen**
**Guangdong 518057 (CN)**
• **CHEN, Dawei**
**Shenzhen**
**Guangdong 518057 (CN)**
• **CHEN, Qiang**
**Shenzhen**
**Guangdong 518057 (CN)**
• **WU, Shiyong**
**Shenzhen**
**Guangdong 518057 (CN)**
• **YUAN, Quan**
**Shenzhen**
**Guangdong 518057 (CN)**

(74) Representative: **Aipex B.V.**
**Vestdijk 51**
**5611 CA Eindhoven (NL)**

(56) References cited:
EP-A1- 3 125 483      CN-A- 101 541 078
CN-A- 102 833 849      CN-A- 103 163 386
CN-A- 104 833 952      US-A1- 2012 082 255
US-A1- 2012 269 122

## Description

### TECHNICAL FIELD

The present application relates to the technical field of communication, for example, to a method and apparatus for measuring time difference of arrival (TDOA) of a first arrival path.

### BACKGROUND

Orthogonal frequency division multiplexing (OFDM) is used in 4G and 5G wireless systems, which are communication systems based on Fast Fourier Transformation (FFT). In order to avoid the interference between OFDM symbols, a cyclic prefix (CP) is introduced into 4G and 5G wireless systems, and a length of the CP depends mainly on the coverage radius of a base station.

Cell ID (CID), received signal strength indicator (RSSI), time difference of arrival (TDOA) and other methods are used for performing positioning in relevant communication networks, and the TDOA method is usually used for high-accuracy positioning.

The relevant TDOA method based on a communication network is as follows. After a frame header is determined, an OFDM symbol is defined. Next, starting from the defined time point, a fixed number of sampling points are removed according to the CP length to obtain OFDM symbol time domain data. Next, the mathematical sequence correlation operation is directly performed, the first maximum correlation peak is taken as the time of arrival (TOA), then the TDOA is obtained according to the TOA, and then the position information of the receiving end is obtained through calculation according to the TDOA.

The solution works in the direct-path environment, but in the indoor and other multipath complex environment, the relevant methods cannot avoid the influence caused by multipath, and very large errors can be introduced. Moreover, the relevant methods are also affected by OFDM inter-symbol interference and sampling period, which leads to the positioning accuracy of the receiving end being unable to satisfy the requirements of high accuracy in an indoor environment. Further relevant technologies are also known from EP 3125483A1 which relates to communication system determining time of arrival using matching pursuit; and CN 103163386A which relates to measurement method of pulse signal arrival time difference.

### SUMMARY

The following is a summary of the subject matter described herein in detail. This summary is not intended to limit the scope of the claims.

The above problem is solved by a method for measuring time difference of arrival of a first arrival path according to claim 1, an apparatus for measuring time difference of arrival of a first arrival path according to claim 5, which can satisfy the requirements of high-accuracy positioning in an indoor environment.

Further improvements and embodiments are provided in the dependent claims.

A mobile terminal according to claim 8 is further provided in an embodiment herein, and includes a memory, a processor and a processing program stored in the memory and executable by the processor, where the processing program, when executed by the processor, implements the method for measuring TDOA of a first arrival path described above.

A computer-readable storage medium according to claim 9 is further provided in an embodiment herein, and is configured to store a processing program which, when executed by a processor, implements the method for measuring TDOA of a first arrival path described above.

Other aspects can be understood after the drawings and the detailed description are read and understood.

### BRIEF DESCRIPTION OF DRAWINGS

The drawings are used for providing a further understanding of the technical solutions herein, constitute a part of the specification, explain the technical solutions herein in conjunction with the embodiments of the present application, and do not limit the technical solutions herein.

FIG. 1 is a flowchart of a method for measuring time difference of arrival of a first arrival path according to an embodiment of the present disclosure;
FIG. 2 is a flowchart of a method for measuring time difference of arrival of a first arrival path according to embodiment one of the present disclosure;
FIG. 3A is a schematic diagram of a signal time spread length of a transmitting signal time domain sequence autocorrelation function in a method for measuring time difference of arrival of a first arrival path;

FIGS. 3B and 3C are schematic diagrams of performing trailing edge detection and leading edge supplementation in a method for measuring time difference of arrival of a first arrival path according to embodiments of the present disclosure;

FIG. 4 is a flowchart of a method for measuring time difference of arrival of a first arrival path according to embodiment two of the present disclosure;

FIG. 5 is a flowchart of a method for measuring time difference of arrival of a first arrival path according to embodiment three of the present disclosure; and

FIG. 6 is a structural diagram of an apparatus for measuring time difference of arrival of a first arrival path according to an embodiment of the present disclosure.

## DETAILED DESCRIPTION

Embodiments provided herein will be described below in detail with reference to the drawings.

The steps illustrated in the flowcharts among the drawings may be performed by a computer system such as a group of computers capable of executing instructions. Moreover, although logical sequences are illustrated in the flowcharts, the illustrated or described steps may be performed in sequences different from those described herein in some cases.

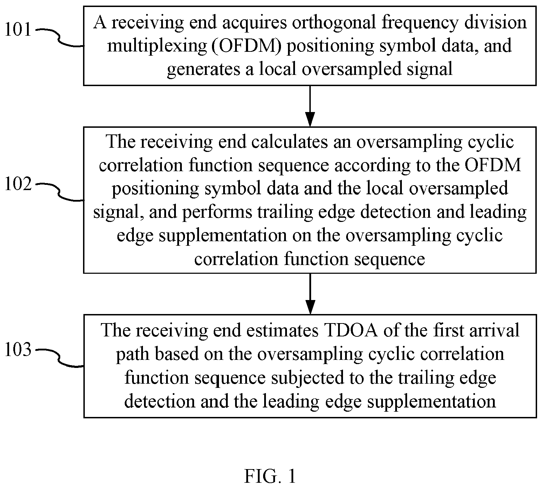

A method for measuring time difference of arrival of a first arrival path is provided herein. The method is based on an orthogonal frequency division multiplexing signal system, and includes step 101, step 102 and step 103 as shown in FIG. 1.

In step 101, a receiving end acquires orthogonal frequency division multiplexing (OFDM) positioning symbol data, and generates a local oversampled signal.

The transmitting end may be a positioning base station, i.e., a base station for transmitting a positioning signal. The receiving end may be a positioning terminal, i.e., a mobile terminal for receiving the signal sent by the base station and performing positioning. After the receiving end receives the positioning signal, the receiving end can extract OFDM positioning symbol data in the positioning signal.

OFDM positioning symbol data refers to OFDM symbol data in 4G and 5G in which the CP is removed and only the positioning signal is reserved, and is an OFDM signal in which multipath inter-symbol interference has been removed and inter-base station symbol interference has been removed. Reserving merely the positioning signal refers to that FFT is performed on the received data, then the non-positioning signal is removed in the frequency domain, leaving merely the positioning signal, and then inverse fast Fourier transformation (IFFT) is performed for transformation to the time domain.

The signal configuration of the transmitting end transmitting the positioning signal includes a parameter used by the transmitting end to generate the positioning signal.

In this step, the receiving end locally generates a same time domain transmitting signal sequence as the transmitting end according to the signal configuration, and performs interpolation processing on the time domain transmitting signal sequence to obtain a local oversampled signal.

Interpolation methods include, but are not limited to, linear interpolation, cubic spline interpolation, and the like. The interpolation includes, but is not limited to, 2 times interpolation, 4 times interpolation, 8 times interpolation, 16 times interpolation and 32 times interpolation. In the time domain transmitting signal sequence, the number of interpolations between two adjacent numbers is the interpolation multiple minus 1. The oversampled local data can also be oversampled by a factor of 1, and then subjected to mathematical correlation operation with the received OFDM positioning symbol data, and then interpolation is performed on a correlation sequence obtained from the mathematical correlation operation to obtain an oversampled cyclic correlation function sequence.

The time domain transmitting signal sequence which is the same as a time domain transmitting signal sequence at the transmitting end refers to a locally-generated time domain transmitting signal sequence without a CP, and then the subsequent data with a cyclic prefix length of CPSIZE is deleted and moved to the front of the sequence to form the time domain transmitting signal sequence which is the same as a time domain transmitting signal sequence at the transmitting end.

In step 102, the receiving end obtains an oversampling cyclic correlation function sequence through calculation according to the OFDM positioning symbol data and the local oversampled signal, and performs trailing edge detection and leading edge supplementation on the oversampling cyclic correlation function sequence.

The calculation performed is the mathematical correlation calculation.

The process of performing mathematical correlation calculation to obtain the oversampling cyclic correlation function sequence may include the step described below.

A zeros are interpolated between every two adjacent pieces of orthogonal frequency division multiplexing (OFDM) positioning symbol data in a time domain to obtain zero-interpolated OFDM symbol data; where A equals an interpolation multiple minus 1.

The oversampling cyclic correlation function sequence $x_n$ is obtained according to a following formula:

$$x_n = \sum_{i=0}^{FFTSIZE*M} a_i * b_{(i+n) \bmod FFTSIZE}, \qquad i \in [0, FFTSIZE * M)$$

$$n \in [0, FFTSIZE * M)$$

A value of FFTSIZE is predetermined by a communication system, M is the interpolation multiple, $a_i$ is the zero-interpolated OFDM symbol data, b is the oversampled data, and n is an integer.

The receiving end performs trailing edge detection on the oversampling cyclic correlation function sequence and determines a trailing edge compensation search interval of the oversampling cyclic correlation function sequence. The trailing detection operation can be implemented in the following manner.

1) If $x_{FFTSIZE-CPSIZE}$ < Threshold 1, the threshold 1 is a noise power threshold and the CPSIZE is a cyclic prefix length,

$$L = FFT\text{SIZE} * \text{M} - \text{CPSIZE} * \text{M};$$

otherwise, 3L, $x_L \leq$ Threshold 1,
for $\forall n \in [FFTSIZE * M - CPSIZE * M, L)$, $x_n >$ Threshold 1;

3k, $x_k \leq$ Threshold 1 , and $\exists R$ , for Vn $\in [k + 1, k + R)$, $x_n >$ Threshold 1, $R >$ Threshold 2 , and for $\forall i \in [L, R)$, $x_k \leq$ Threshold 1, and a value of the threshold 2 is determined according to actual application and is generally greater than 3, $T2 = [k, FFTSIZE * M]$, T2 is the trailing edge compensation search interval; and
if $k$ does not exist, T2=∅.

Alternatively, 2) searching is performed forwardly from the data of *FFTSIZE\*M; 3k,* $x_k \leq$ Threshold 1, where the Threshold 1 is the noise power threshold, and for $\forall n \in [k + 1, FFTSIZE * M)$, $x_n >$ Threshold 1, $T2 = [k, FFTSIZE * M)$, T2 is the trailing edge compensation search interval; and
if $k$ does not exist, T2=∅.

Alternatively, 3) $k = FFTSIZE * M - \mu * CPSIZE,$ and $\mu$ is a preset value, can be obtained during modeling, and is generally 1; $T2 = [k, FFTSIZE * M)$ and T2 is the trailing edge compensation search interval.

The receiving end performs the correlation function leading edge supplementation and migrates function data in the trailing edge compensation search interval to the front end of the oversampling cyclic correlation function sequence.

In this step, data in interval $n \in T2$ of $x_n$ $n \in [0, FFTSIZE * M)$ can be deleted, and the deleted data is transplanted to the front end of the sequence to form the oversampling cyclic correlation function sequence $y_n$ $n \in [0, FFTSIZE * M)$ subjected to the leading edge supplementation.

In step 103, the receiving end performs estimation of TDOA of the first arrival path on the oversampling cyclic correlation function sequence subjected to the trailing edge detection and the leading edge supplementation.

The receiving end performs TOA estimation according to the oversampling cyclic correlation function sequence subjected to the correlation function leading edge supplementation processing, and then performs TDOA estimation according to the TOA estimation result. The operation of performing TOA estimation includes, but is not limited to the operations described below.

$\exists k$, $x_k \leq$ Threshold 1 and 3R, for $\forall n \in [k + 1, k + R)$, $y_n >$ Threshold 1 and $R >\geq$ Threshold 2; and for $\forall i \in [0, k)$, $y_k \leq$ Threshold 1.

If R « signaltimesize , the TOA of the measured positioning signal is $((k + 1) + (k + R))/2$, otherwise, the TOA of the measured positioning signal is $K + (signaltimesize/2),$ where signaltimesize is a signal time spread length of a transmitting signal time domain sequence autocorrelation function.

The signaltimesize is the signal time spread length of a transmitting signal *time* domain sequence autocorrelation function, and as shown in 3A, 31 represents signaltimesize. The value can be obtained from actual modeling, is typically taken from the width of a main peak of the correlation function, and as in the case of 20M in LTE, includes, but is not limited to, 3.6 to 4 TSs. TS is the sampling period with the bandwidth of 20M in LTE, i.e., the period at the frequency of 30.72M.

The receiving end can perform TOA estimation on a plurality of signals of the transmitting end and calculate differences to obtain the TDOA estimation of the first arrival path.

For example, TOA measurement is performed on at least four received positioning signals and then one is selected as a reference and the other at least three TOAs are subtracted from the selected reference TOA to obtain at least three TDOAs. Position information can then be determined according to the at least three TDOAs.

In the embodiment provided herein, the oversampled signal is generated locally at the receiving end, and then subjected to the trailing edge detection and the leading edge supplementation, and then subjected to TOA and TDOA estimation, so that the influence caused by multipath is avoided, the positioning accuracy is improved, and high-accuracy positioning information can be obtained even in an indoor environment.

A method for measuring time difference of arrival of a first arrival path provided in an embodiment herein is described through the following embodiments.

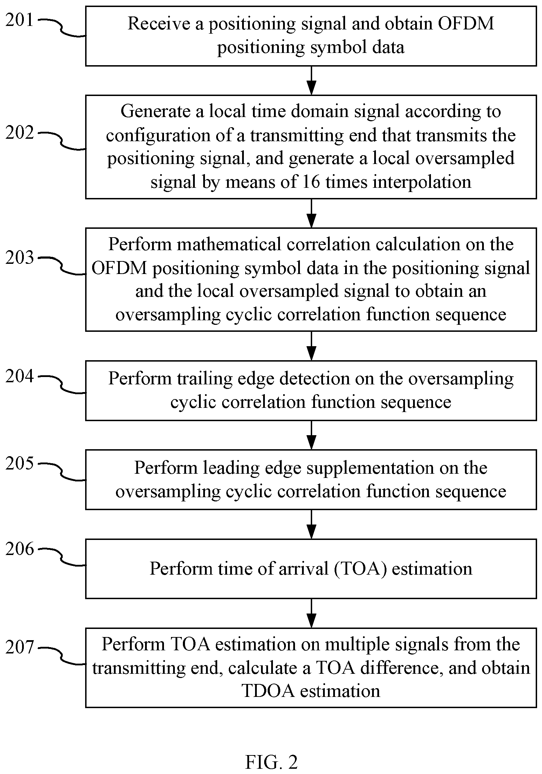

In an embodiment, as shown in FIG. 2, a method for measuring time difference of arrival of a first arrival path includes steps 201 to 207.

In step 201, a positioning signal is received and OFDM positioning symbol data is acquired. In this step, 15 zeros may be interpolated between adjacent sampled data.

In step 202, a local time domain signal is generated according to the configuration of the transmitting end transmitting the positioning signal, and 16 times interpolation is performed to generate a local oversampled signal.

In step 203, mathematical correlation calculation is performed on the OFDM positioning symbol data in the positioning signal and the local oversampled signal to obtain an oversampling cyclic correlation function sequence.

In step 204, trailing edge detection is performed on the oversampling cyclic correlation function sequence.

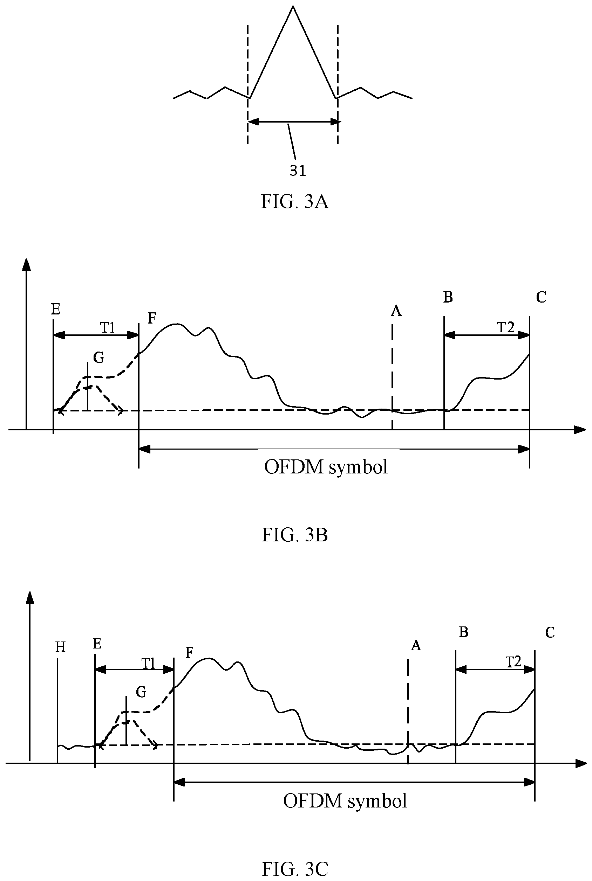

Referring to FIG. 3B, FIG. 3B is a schematic diagram of performing trailing edge detection and leading edge supplementation on an oversampling cyclic correlation function sequence.

If $x_{FFTSIZE-CPSIZE} <$ Threshold 1, $L = FFTSIZE * M - CPSIZE * M$.

Otherwise, $\exists L$, $x_L \leq$ Threshold 1, and Threshold 1 is a threshold obtained from noise calculation.

For $\forall n \in [FFTSIZE * M - CPSIZE * M, L)$, $x_n >$ Threshold 1. L is A in FIG. 3B.

$3k$, $x_k \leq$ Threshold 1 and $3R$, for $\forall n \in [k + 1, k + R)$, $x_n >$ Threshold 1 and $R >$ Threshold 2, and for $\forall i \in [L, P)$, $x_k \leq$ Threshold 1.

The threshold 2 includes, but is not limited to, Threshold 2 >= 3.

$k$ is B in FIG. 3B.

$T2 = [k, FFTSIZE * M)$, T2 is the trailing edge compensation search interval, and if $k$ does not exist, $T2=\emptyset$.

T2 is the segment [BC] in FIG. 3B.

In step 205, leading edge supplementation is performed on the oversampling cyclic correlation function sequence.

Referring to FIG. 3B, the segment BC is copied to the segment EF.

In step 206, time of arrival (TOA) estimation is performed.

In step 207, the difference is calculated based on TOA estimation performed on the plurality of signals from the transmitting end to obtain the TDOA estimation.

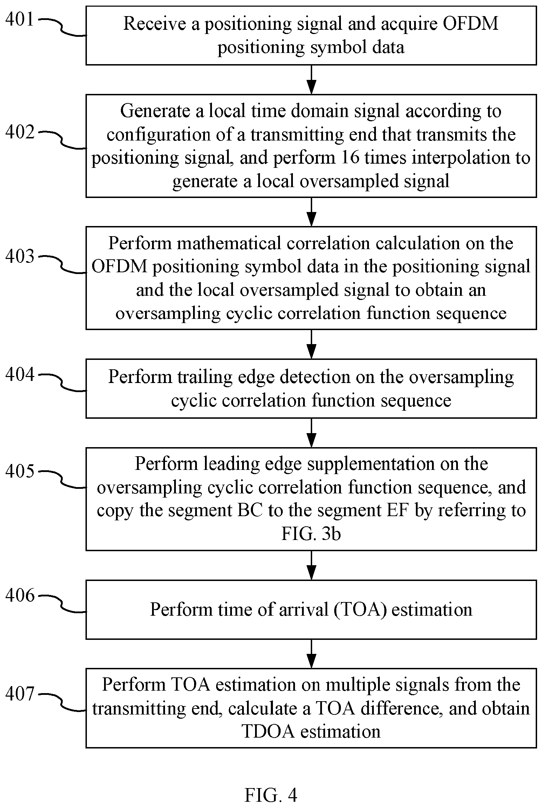

In an embodiment, as shown in FIG. 4, a method for measuring time difference of arrival of a first arrival path includes steps 401 to 407.

In step 401, a positioning signal is received and OFDM positioning symbol data is acquired.

In this step, 15 zeros may be interpolated between adjacent sampled data.

In step 402, a local time domain signal is generated according to the configuration of the transmitting end transmitting the positioning signal, and 16 times interpolation is performed to generate a local oversampled signal.

In step 403, mathematical correlation calculation is performed on the OFDM positioning symbol data in the positioning signal and the local oversampled signal to obtain an oversampling cyclic correlation function sequence.

In step 404, trailing edge detection is performed on the oversampling cyclic correlation function sequence.

Referring to FIG. 3b, FIG. 3b is a schematic diagram of performing trailing edge detection and leading edge supplementation on an oversampling cyclic correlation function sequence.

Searching is performed forward from the data of $FFTSIZE*M$.

$3k$, $x_k \leq$ Threshold 1, and for $\forall n \in [k + 1, k + R)$, $x_n >$ Threshold 1.

$k$ is B in FIG. 3B.

$T2 = [k, FFTSIZE * M)$, T2 is the trailing edge compensation search interval, and if $k$ does not exist, $T2=\emptyset$.

T2 is the segment [BC] in FIG. 3B.

In step 405, leading edge supplementation is performed on the oversampling cyclic correlation function sequence. Referring to FIG. 3B, the segment BC is copied to the segment EF.

In step 406, time of arrival (TOA) estimation is performed.

In step 407, the differences are calculated based on TOA estimation performed on the plurality of signals at the transmitting end to obtain the TDOA estimation.

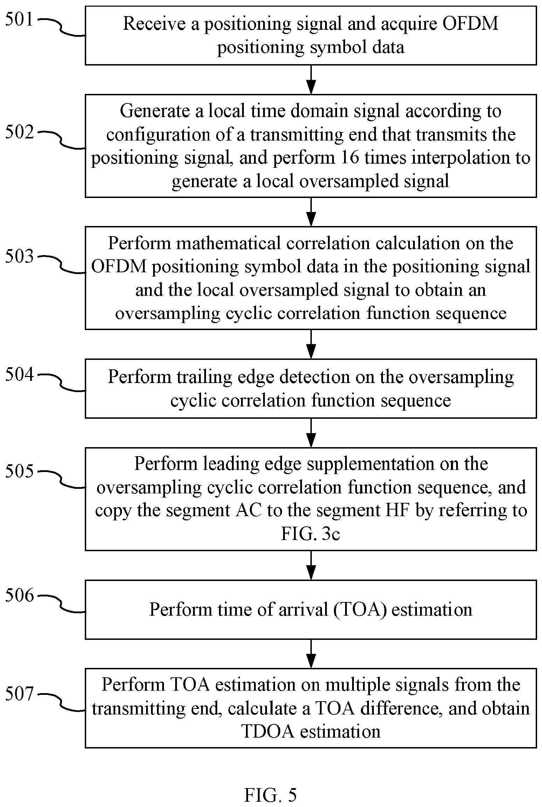

In an embodiment, as shown in FIG. 5, a method for measuring time difference of arrival of a first arrival path includes steps 501 to 507.

In step 501, a positioning signal is received and OFDM positioning symbol data is acquired.

In this step, 15 zeros are interpolated between adjacent sampled data.

In step 502, a local time domain signal is generated according to the configuration of the transmitting end transmitting the positioning signal, and 16 times interpolation is performed to generate a local oversampled signal.

In step 503, mathematical correlation calculation is performed on the OFDM positioning symbol data in the positioning signal and the local oversampled signal to obtain an oversampling cyclic correlation function sequence.

In step 504, trailing edge detection is performed on the oversampling cyclic correlation function sequence.

Referring to FIG. 3C, FIG. 3C is a schematic diagram of performing trailing edge detection and leading edge supplementation on an oversampling cyclic correlation function sequence.

$$k = FFTSIZE * M - \mu * CPSIZE$$

$\mu$ is obtained according to modeling and generally takes 1.

$k$ is A in FIG. 3C.

$T2 = [k, FFTSIZE * M)$, and T2 is the trailing edge compensation search interval.

T2 is the segment [AC] in FIG. 3C.

In step 505, leading edge supplementation is performed on the oversampling cyclic correlation function sequence. Referring to FIG. 3C, the segment AC is copied to the segment HF.

In step 506, time of arrival (TOA) estimation is performed.

In step 507, the differences are calculated based on TOA estimation performed on the plurality of signals at the transmitting end to obtain the TDOA estimation.

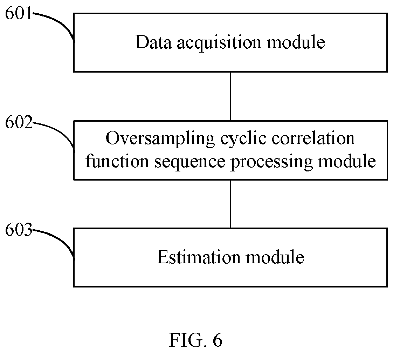

Based on the same technical concept as the method, an apparatus for measuring time difference of arrival of a first arrival path is further provided herein. The apparatus is based on an orthogonal frequency division multiplexing signal system and includes, as shown in FIG. 6, a data acquisition module 601, an oversampling cyclic correlation function sequence processing module 602 and an estimation module 603. The apparatus may be, for example, a mobile terminal that receives a positioning signal from a device such as a base station. The data acquisition module 601, the oversampling cyclic correlation function sequence processing module 602 and the estimation module 603 may be implemented by a processor in the terminal or separately implemented by different hardware in the terminal.

The data acquisition module 601 is configured to acquire orthogonal frequency division multiplexing (OFDM) positioning symbol data, and generate a local oversampled signal.

The oversampling cyclic correlation function sequence processing module 602 is configured to obtain an oversampling cyclic correlation function sequence through calculation according to the OFDM positioning symbol data and the local oversampled signal, and perform trailing edge detection and leading edge supplementation on the oversampling cyclic correlation function sequence.

The estimation module 603 is configured to estimate TOA of the first arrival path on the oversampling cyclic correlation function sequence subjected to the trailing edge detection and the leading edge supplementation and estimate TDOA of the first arrival path.

In an embodiment, the data acquisition module 601 is configured to receive signal configuration of a transmitting end transmitting the positioning signal, generate a local time domain signal according to the signal configuration, and generate the local oversampled signal according to the local time domain signal by using an interpolation method.

In an embodiment, the signal configuration of the transmitting end transmitting the positioning signal includes a parameter used by the transmitting end to generate the positioning signal; and the data acquisition module 601 is configured to locally generate a time domain transmitting signal sequence which is the same as a time domain transmitting signal sequence at the transmitting end, and perform interpolation on the time domain transmitting signal sequence to obtain the local oversampled signal.

In an embodiment, the oversampling cyclic correlation function sequence processing module 602 is configured to obtain the oversampling cyclic correlation function sequence in the following manner.

A zeros are interpolated between every two adjacent pieces of orthogonal frequency division multiplexing (OFDM) positioning symbol data in a time domain to obtain zero-interpolated OFDM symbol data; where A equals an interpolation multiple minus 1.

The oversampling cyclic correlation function sequence $x_n$ is obtained according to a following formula:

$$x_n = \sum_{i=0}^{FFTSIZE*M} a_i * b_{(i+n) \bmod FFTSIZE}, \qquad i \in [0, FFTSIZE * M)$$

$$n \in [0, FFTSIZE * M).$$

A value of FFTSIZE is predetermined by a communication system, M is the interpolation multiple, $a_i$ is the zero-interpolated OFDM symbol data, b is the oversampled data, and n is an integer.

In an embodiment, the oversampling cyclic correlation function sequence processing module 602 is further configured to perform the trailing edge detection and determine a trailing edge compensation search interval in the following manner.

1) If $x_{FFTSIZE-CPSIZE}$ < Threshold 1, where the threshold 1 is a noise power threshold and the CPSIZE is a cyclic prefix length,

$$L = FFT\text{SIZE} * \text{M} - \text{CPSIZE} * \text{M};$$

otherwise, 3L, $x_L \leq$ Threshold 1,
for $\forall n \in [FFTSIZE * M - CPSIZE * M, L)$, $x_n$ > Threshold 1

3k, $x_k \leq$ Threshold 1, and 3R, for $\forall n \in [k + 1, k + R)$, $x_n$ > Threshold 1, and $R$ > Threshold 2; for $\forall i \in [L, R)$, and $x_k \leq$ Threshold 1. The value of the threshold 2 is determined according to actual application.
T2 = [$k$, $FFTSIZE * M$], T2 is the trailing edge compensation search interval, and in condition that $k$ does not exist, T2=Ø.

Alternatively, 2) 3k, $x_k \leq$ Threshold 1, where Threshold 1 is the noise power threshold, and for $\forall n \in [k + 1, FFTSIZE * M)$, $x_n$ > Threshold 1;
T2 = [$k$, $FFTSIZE * M$), T2 is the trailing edge compensation search interval, and in condition that $k$ does not exist, T2=Ø.

Alternatively, 3) $k = FFTSIZE * M - \mu * CPSIZE$,
$\mu$ is a preset value, $T2 = [k, FFTSIZE * M)$, and T2 is the trailing edge compensation search interval.

In an embodiment, the oversampling cyclic correlation function sequence processing module 602 is further configured to perform the leading edge supplementation in the following manner.

Data in interval $n \in T2$ of $x_n$ $n \in [0, FFTSIZE * M)$ is deleted, and the deleted data is transplanted to a front end of the sequence to form the oversampling cyclic correlation function sequence $y_n$ $n \in [0, FFTSIZE * M)$ subjected to the leading edge supplementation.

In an embodiment, the estimation module 603 is configured to determine TOA of a positioning signal in the following manner.

3k, $x_k \leq$ Threshold 1 and 3R, for $\forall n \in [k + 1, k + R)$, $y_n$ > Threshold 1 and R >≥ Threshold 2; and for $\forall i \in [0, k)$, $y_k \leq$ Threshold 1.

In condition that R « signaltimesize, the TOA of the measured positioning signal is $((k + 1) + (k + R))/2$, otherwise, the TOA of the measured positioning signal is $K + (signaltimesize/2)$, where signaltimesize is a signal time spread length of a transmitting signal time domain sequence autocorrelation function; the TDOA estimation is performed according to the obtained TOA.

The oversampled signal is generated locally at the receiving end, subjected to the trailing edge detection and the leading edge supplementation, and then subjected to TOA and TDOA estimation, so that the influence caused by multipath is removed, the positioning accuracy is improved, and high-accuracy positioning information can be obtained even in an indoor environment.

A mobile terminal is further provided in an embodiment herein, and includes the apparatus for measuring time difference of arrival of a first arrival path described in the above embodiments.

A mobile terminal is further provided in an embodiment herein, and includes a memory, a processor and a processing program stored in the memory and executable by the processor, where the processing program, when executed by the processor, implements the method for measuring TDOA of a first arrival path according to each embodiment herein.

A computer-readable storage medium is further provided in an embodiment herein, and is configured to store a processing program which, when executed by a processor, implements the method for measuring TDOA of a first arrival path according to each embodiment herein.

The computer-readable storage medium may be configured in a device such as the mobile terminal described above.

All or part of the steps in the methods described above may be implemented by relevant hardware as instructed by programs which may be stored in a computer-readable storage medium, such as a read-only memory (ROM), a magnetic disk, or an optical disk. In other embodiments, all or part of the steps in the embodiments described above may also be implemented by using one or more integrated circuits. Correspondingly, each module/unit in the above embodiments may be implemented by hardware or a software functional module. The present application is not limited to any specific combination of hardware and software.

## Claims

1. A method for measuring time difference of arrival, TDOA, of a first arrival path, comprising:

    acquiring (101), by a receiving end, orthogonal frequency division multiplexing, OFDM, positioning symbol data;
    generating (101), by the receiving end, a local oversampled signal;
    obtaining (102), by the receiving end, an oversampling cyclic correlation function sequence through calculation according to the OFDM positioning symbol data and the local oversampled signal, and performing trailing edge detection and leading edge supplementation on the oversampling cyclic correlation function sequence; and
    performing (103), by the receiving end, estimation of TDOA of the first arrival path on the oversampling cyclic correlation function sequence subjected to the trailing edge detection and the leading edge supplementation;
    wherein obtaining (102), by the receiving end, the oversampling cyclic correlation function sequence through the calculation according to the OFDM positioning symbol data and the local oversampled signal comprises:

    interpolating A zeros between every two adjacent pieces of OFDM positioning symbol data in a time domain to obtain zero-interpolated OFDM positioning symbol data; wherein A equals an interpolation multiple minus 1; and
    obtaining the oversampling cyclic correlation function sequence $x_n$ according to the following formula:

$$x_n = \sum_{i=0}^{FFTSIZE*M} a_i * b_{(i+n)\,mod\,FFTSIZE}, \qquad i \in [0, FFTSIZE * M)$$

$$n \in [0, FFTSIZE * M)$$

    wherein a value of FFTSIZE is predetermined by a communication system, M is the interpolation multiple, $a_i$ is the zero-interpolated OFDM positioning symbol data, b is the local oversampled signal, and n is an integer;
    wherein performing the trailing edge detection on the oversampling cyclic correlation function sequence comprises determining a trailing edge compensation search interval in the following manner:

        1) if $x_{FFTSIZE-CPSIZE}$ < Threshold 1, wherein the Threshold 1 is a noise power threshold and the CPSIZE is a cyclic prefix length,

$$L = FFTSIZE * M - CPSIZE * M;$$

        otherwise, $\exists L$, $x_L \leq$ Threshold 1,
        for $\forall n \in [FFTSIZE * M - CPSIZE * M, L]$, $x_n >$ Threshold 1,
        $\exists k$, $x_k \leq$ Threshold 1 , and $\exists R$, for $\forall n \in [k + 1, k + R)$, $x_n >$ Threshold 1, $R >$ Threshold 2, for $\forall i \in [L, R)$, $x_k \leq$ Threshold 1, and a value of the threshold 2 is determined according to actual application, $T2 = [k, FFTSIZE * M]$, T2 is the trailing edge compensation search interval; and
        if $k$ does not exist, T2=Ø; or

        2) $\exists k$, $x_k \leq$ Threshold 1, wherein the threshold 1 is noise power, and for $\forall n \in [k + 1, FFTSIZE * M)$, $x_n$

> Threshold 1, *T2* = [*k, FFTSIZE * M*), and T2 is the trailing edge compensation search interval; and if *k* does not exist, T2=Ø; or
3)

$$k = FFTSIZE * M - \mu * CPSIZE,$$

μ is a preset value;
*T2* = [*k, FFTSIZE * M*), and T2 is the trailing edge compensation search interval; wherein performing the leading edge supplementation on the oversampling cyclic correlation function sequence comprises:
translating data in the trailing edge compensation search interval to a front end of the oversampling cyclic correlation function sequence, wherein the translating comprises:
deleting data in interval $n \in T2$ of $x_n$ $n \in [0, FFTSIZE * M)$, and transplanting the deleted data to the front end of the sequence to form the oversampling cyclic correlation function sequence $y_n$ $n \in [0, FFTSIZE * M)$ subjected to the leading edge supplementation.

2. The method for measuring TDOA of a first arrival path according to claim 1, wherein the OFDM positioning symbol data refers to OFDM symbol data in 4G and 5G in which a cyclic prefix, CP, is removed and only a positioning signal is reserved;
generating (101), by the receiving end, the local oversampled signal comprises:
receiving, by the receiving end, signal configuration of a transmitting end transmitting the positioning signal, generating a local time domain signal according to the signal configuration, and generating the local oversampled signal according to the local time domain signal by using an interpolation method.

3. The method for measuring TDOA of a first arrival path according to claim 2, wherein the signal configuration of the transmitting end transmitting the positioning signal comprises a parameter used by the transmitting end to generate the positioning signal; and the local time domain signal is a time domain transmitting signal sequence which is same as a time domain transmitting signal sequence at the transmitting end and generated locally by the receiving end according to the signal configuration.

4. The method for measuring TDOA of a first arrival path according to claim 1, wherein performing estimation of TDOA of the first arrival path comprises:
determining time of arrival, TOA, of the first arrival path of a positioning signal in the following manner:

wherein the OFDM positioning symbol data refers to OFDM symbol data in 4G and 5G in which the CP is removed and only the positioning signal is reserved;
*3k,* $x_k \leq$ Threshold 1 and $\exists R$, for $\forall n \in [k + 1, k + R)$, $y_n >$ Threshold 1, $R \geq$ Threshold 2, and for $\forall i \in [0, k)$, $y_k \leq$ Threshold 1; and
if R « signaltimesize, the TOA of the positioning signal is ((*k* + 1) + (*k* + *R*))12, otherwise, the TOA of the positioning signal is *k* + (*signaltimesize*/2), wherein signaltimesize is a signal time spread length of a transmitting signal time domain sequence autocorrelation function; and
performing the TDOA estimation according to the obtained TOA.

5. An apparatus for measuring time difference of arrival, TDOA, of a first arrival path, comprising:

a data acquisition module (601), which is configured to acquire orthogonal frequency division multiplexing, OFDM, positioning symbol data, and generate a local oversampled signal;
an oversampling cyclic correlation function sequence processing module (602), which is configured to obtain an oversampling cyclic correlation function sequence through calculation according to the OFDM positioning symbol data and the local oversampled signal, and perform trailing edge detection and leading edge supplementation on the oversampling cyclic correlation function sequence; and
an estimation module (603), which is configured to perform estimation of TDOA of the first arrival path on the oversampling cyclic correlation function sequence subjected to the trailing edge detection and the leading edge supplementation;
wherein the oversampling cyclic correlation function sequence processing module (602) is configured to obtain the oversampling cyclic correlation function sequence in the following manner:

interpolating A zeros between every two adjacent pieces of OFDM positioning symbol data in a time domain to obtain zero-interpolated OFDM positioning symbol data; wherein A equals an interpolation multiple minus 1; and

obtaining the oversampling cyclic correlation function sequence $x_n$ according to the following formula:

$$x_n = \sum_{i=0}^{FFTSIZE*M} a_i * b_{(i+n) \bmod FFTSIZE}, \qquad i \in [0, FFTSIZE * M)$$

$$n \in [0, FFTSIZE * M)$$

wherein a value of FFT SIZE is predetermined by a communication system, M is the interpolation multiple, $a_i$ is the zero-interpolated OFDM positioning symbol data, b is the local oversampled signal, and n is an integer;

wherein the oversampling cyclic correlation function sequence processing module (602) is further configured to perform the trailing edge detection and determine a trailing edge compensation search interval in the following manner:

1) if $x_{FFTSIZE-CPSIZE}$ < Threshold 1, where the threshold 1 is a noise power threshold and the CPSIZE is a cyclic prefix length,

$$L = FFTSIZE * M - CPSIZE * M \; ;$$

otherwise, $\exists L$, $x_L \leq$ Threshold 1,
for $\forall n \in$ [FFTSIZE * M - CPSIZE * M, L), $x_n >$ Threshold 1,
$\exists k$, $x_k \leq$ Threshold 1 , and $\exists R$, for $\forall n \in$ [k + 1, k + R), $x_n >$ Threshold 1, R > Threshold 2, for $\forall i \in$ [L, R), $x_k \leq$ Threshold 1, and a value of the threshold 2 is determined according to actual application, T2 = [k, FFTSIZE * M], T2 is the trailing edge compensation search interval; and
if k does not exist, T2=Ø; or

2) 3k, $x_k \leq$ Threshold 1, where the threshold 1 is noise power, and for $\forall n \in$ [k + 1, FFTSIZE * M), $x_n >$ Threshold 1, T2 = [k, FFTSIZE * M), and T2 is the trailing edge compensation search interval; and
if k does not exist, T2=Ø; or
3)

$$k = FFTSIZE * M - \mu * CPSIZE,$$

μ is a preset value;
T2 = [k, FFTSIZE * M), and T2 is the trailing edge compensation search interval;
wherein the oversampling cyclic correlation function sequence processing module (602) is further configured to perform the leading edge supplementation in the following manner:
deleting data in interval $n \in$ T2 of $x_n$ n $\in$ [0, FFTSIZE * M), and transplanting the deleted data to the front end of the sequence to form the oversampling cyclic correlation function sequence $y_n$ n $\in$ [0, FFTSIZE * M) subjected to the leading edge supplementation.

6. The apparatus for measuring TDOA of a first arrival path according to claim 5, wherein the OFDM positioning symbol data refers to OFDM symbol data in 4G and 5G in which a cyclic prefix, CP, is removed and only a positioning signal is reserved;
the data acquisition module (601) is configured to:
receive signal configuration of a transmitting end transmitting the positioning signal, generate a local time domain signal according to the signal configuration, and generate the local oversampled signal according to the local time domain signal by using an interpolation method.

7. The apparatus for measuring TDOA of a first arrival path according to claim 5, wherein the estimation module (603)

is configured to:
determine time of arrival, TOA, of the first arrival path of a positioning signal in the following manner:

wherein the OFDM positioning symbol data refers to OFDM symbol data in 4G and 5G in which the CP is removed and only the positioning signal is reserved;
3k, $x_k \leq$ Threshold 1 and $\exists R$, for $\forall n \in [k + 1, k + R)$, $y_n >$ Threshold 1, $R \geq$ Threshold 2, and for $\forall i \in [0, k)$, $y_k \leq$ Threshold 1; and
if R $\ll$ signaltimesize, the TOA of the positioning signal is $((k + 1) + (k + R))12$, otherwise, the TOA of the positioning signal is $k + (signaltimesize/2)$, wherein signaltimesize is a signal time spread length of a transmitting signal time domain sequence autocorrelation function; and
performing the TDOA estimation according to the obtained TOA.

8.  A mobile terminal, comprising:
a memory, a processor and a processing program stored in the memory and executable by the processor, wherein the processing program, when executed by the processor, implements the method for measuring TDOA of a first arrival path according to any one of claims 1 to 4.

9.  A computer-readable storage medium storing a processing program, wherein the processing program, when executed by a processor, implements the method for measuring TDOA of a first arrival path according to any one of claims 1 to 4.


**Patentansprüche**

1.  Verfahren zur Messung der Ankunftszeitdifferenz (time difference of arrival - TDOA) eines ersten Ankunftswegs, umfassend:

Erfassen (101) von Orthogonalfrequenzmultiplex(orthogonal frequency division multiplexing - OFDM)-Positioniersymboldaten durch ein Empfangsende;
Erzeugen (101) eines lokalen überabgetasteten Signals durch das Empfangsende;
Erhalten (102) einer zyklischen Überabtastkorrelationsfunktionssequenz durch Berechnen gemäß den OFDM-Positioniersymboldaten und dem lokalen überabgetasteten Signal durch das empfangende Ende und Durchführen einer Erkennung der fallenden Flanke und einer Ergänzung der steigenden Flanke an der zyklischen Überabtastkorrelationsfunktionssequenz; und
Durchführen (103) einer Schätzung der TDOA des ersten Ankunftswegs auf der zyklischen Überabtastkorrelationsfunktionssequenz, die Erkennung der fallenden Flanke und der Ergänzung der steigenden Flanke unterzogen wird, durch das Empfangsende;
wobei Erhalten (102) der zyklischen Überabtastkorrelationsfunktionssequenz durch die Berechnung gemäß den OFDM-Positioniersymboldaten und dem lokalen überabgetasteten Signal durch das Empfangsende Folgendes umfasst:
Interpolieren von A Nullen zwischen jeweils zwei benachbarten Teilen von OFDM-Positioniersymboldaten in einer Zeitdomäne zum Erhalten von nullinterpolierten OFDM-Positioniersymboldaten; wobei A gleich einem Interpolationsvielfachen minus 1 ist; und Erhalten der zyklischen Überabtastkorrelationsfunktionssequenz $x_n$ gemäß der folgenden Formel:

$$x_n = \sum_{i=0}^{FFTSIZE*M} a_i * b_{(i+n) \bmod FFTSIZE}, \qquad i \in [0, FFTSIZE * M)$$

$$n \in [0, FFTSIZE * M)$$

wobei ein Wert von FFTSIZE durch ein Kommunikationssystem vorbestimmt wird, M das Interpolationsvielfache ist, $a_i$ die nullinterpolierten OFDM-Positioniersymboldaten sind, b das lokale überabgetastete Signal ist und n eine ganze Zahl ist;
wobei Durchführen der Erkennung der fallenden Flanke an der zyklischen Überabtastkorrelationsfunktionssequenz Bestimmen eines Suchintervalls für die Kompensation der fallenden Flanke auf die folgende Weise umfasst:

1) wenn $x_{\text{FFTSIZE-CPSIZE}}$ < Schwellenwert 1, wobei der Schwellenwert 1 ein Rauschleistungsschwellenwert ist und die CPSIZE die Länge eins zyklischen Präfix ist,

$$L = FFTSIZE * M - CPSIZE * M;$$

ansonsten $\exists L, x_L \leq$ Schwellenwert 1,
für $\forall n \in [FFTSIZE * M - CPSIZE * M, L)$, $x_n >$ Schwellenwert 1, $\exists k$, $x_k \leq$ Schwellenwert 1 und 3R,
für $\forall n \in [k + 1, k + R)$, $x_n >$ Schwellenwert 1, $R >$ Schwellenwert 2, für $\forall i \in [L, R)$, $x_k \leq$ Schwellenwert 1 und ein Wert des Schwellenwerts 2 gemäß der tatsächlichen Anwendung bestimmt wird, $T2 = [k, FFTSIZE * M]$, wobei T2 das Suchintervall für die Kompensation der fallenden Flanke ist; und wenn $k$ nicht existiert, T2 = Ø; oder

2) $\exists k, x_k \leq$ Schwellenwert 1, wobei der Schwellenwert 1 Rauschleistung ist, und für $\forall n \in [k + 1, FFTSIZE * M)$, $x_n >$ Schwellenwert 1, $T2 = [k, FFTSIZE * M)$ und T2 das Suchintervall für die Kompensation der fallenden Flanke ist; und
wenn $k$ nicht existiert, T2 = Ø; oder
3)

$$k = FFTSIZE * M - \mu * CPSIZE,$$

$\mu$ ein voreingestellter Wert ist;
$T2 = [k, FFTSIZE * M)$ und T2 das Suchintervall für die Kompensation der fallenden Flanke ist;
wobei Durchführen der Ergänzung der steigenden Flanke an der zyklischen Überabtastkorrelationsfunktionssequenz Folgendes umfasst:
Verschieben von Daten in dem Suchintervall für die Kompensation der fallenden Flanke zu einem vorderen Ende der zyklischen Überabtastkorrelationsfunktionssequenz, wobei das Verschieben Folgendes umfasst:
Löschen von Daten im Intervall n E $T2$ von $x_n n \in [0, FFTSIZE * M)$ und Versetzen der gelöschten Daten zu dem vorderen Ende der Sequenz unter Bilden der Überabtastkorrelationsfunktionssequenz $y_n n \in [0, FFTSIZE * M)$, die der Ergänzung der steigenden Flanke unterzogen wird.

2. Verfahren zur Messung der TDOA eines ersten Ankunftswegs nach Anspruch 1, wobei die OFDM-Positioniersymboldaten sich auf OFDM-Symboldaten in 4G und 5G beziehen, bei denen ein zyklisches Präfix (cyclic prefix - CP) entfernt wird und nur ein Positioniersignal reserviert wird;
Erzeugen (101) eines lokalen überabgetasteten Signals durch das Empfangsende Folgendes umfasst:
Empfangen einer Signalkonfiguration eines das Positioniersignal übertragenden Übertragungsendes durch das Empfangsende, Erzeugen eines lokalen Zeitdomänesignals gemäß der Signalkonfiguration und Erzeugen des lokalen überabgetasteten Signals gemäß dem lokalen Zeitdomänesignal durch Verwenden eines Interpolationsverfahrens.

3. Verfahren zur Messung der TDOA eines ersten Ankunftswegs nach Anspruch 2, wobei die Signalkonfiguration des das Positioniersignal übertragenden Übertragungsendes einen Parameter umfasst, der von dem Übertragungsende zum Erzeugen des Positioniersignals verwendet wird; und das lokale Zeitdomänesignal eine Zeitdomäneübertragungssignalsequenz ist, die gleich einer Zeitdomäneübertragungssignalsequenz an dem Übertragungsende ist und lokal von dem Empfangsende gemäß der Signalkonfiguration erzeugt wird.

4. Verfahren zur Messung der TDOA eines ersten Ankunftswegs nach Anspruch 1, wobei Durchführen der Schätzung der TDOA des ersten Ankunftswegs Folgendes umfasst:
Bestimmen der Ankunftszeit (time of arrival - TOA) des ersten Ankunftswegs eines Positioniersignals auf die folgende Weise:

wobei die OFDM-Positioniersymboldaten sich auf OFDM-Symboldaten in 4G und 5G beziehen, bei denen das CP entfernt wird und nur ein Positioniersignal reserviert wird;
$\exists k, x_k \leq$ Schwellenwert 1 und 3R, für $\forall n \in [k + 1, k + R)$, $y_n >$ Schwellenwert 1, $R >\geq$ Schwellenwert 2 und für $\forall i$

$\in$ [0,*k*), $y_k \leq$ Schwellenwert 1; und

wenn R << signaltimesize, ist die TOA des Positioniersignals ((*k* + 1) + (*k* + *R*))/2, ansonsten ist die TOA des Positioniersignals *k* + (*signaltimesize*/2), wobei signaltimesize eine Signalzeitspreizlänge einer Übertragungssignal-Zeitdomänesequenz-Autokorrelationsfunktion ist; und Durchführung der TDOA-Schätzung gemäß der erhaltenen TOA.

5. Vorrichtung zur Messung der Ankunftszeitdifferenz (TDOA) eines ersten Ankunftswegs, umfassend:

ein Datenerfassungsmodul (601), das zum Erfassen von Orthogonalfrequenzmultiplex(OFDM)-Positioniersymboldaten und zum Erzeugen eines lokalen überabgetasteten Signals konfiguriert ist;

ein Verarbeitungsmodul für eine zyklische Überabtastkorrelationsfunktionssequenz (602), das zum Erhalten einer zyklischen Überabtastkorrelationsfunktionssequenz durch Berechnen gemäß den OFDM-Positioniersymboldaten und dem lokalen überabgetasteten Signal und Durchführen einer Erkennung der fallenden Flanke und einer Ergänzung der steigenden Flanke an der zyklischen Überabtastkorrelationsfunktionssequenz konfiguriert ist; und

ein Schätzungsmodul (603), das zum Durchführen einer Schätzung der TDOA des ersten Ankunftswegs auf der zyklischen Überabtastkorrelationsfunktionssequenz, die Erkennung der fallenden Flanke und der Ergänzung der steigenden Flanke unterzogen wird, konfiguriert ist;

wobei das Verarbeitungsmodul für eine zyklische Überabtastkorrelationsfunktionssequenz (602) zum Erhalten der zyklischen Überabtastkorrelationsfunktionssequenz auf die folgende Weise konfiguriert ist:

Interpolieren von A Nullen zwischen jeweils zwei benachbarten Teilen von OFDM-Positioniersymboldaten in einer Zeitdomäne zum Erhalten von nullinterpolierten OFDM-Positioniersymboldaten; wobei A gleich einem Interpolationsvielfachen minus 1 ist; und

Erhalten der zyklischen Überabtastkorrelationsfunktionssequenz $x_n$ gemäß der folgenden Formel:

$$x_n = \sum_{i=0}^{FFTSIZE*M} a_i * b_{(i+n) \bmod FFTSIZE}, \qquad i \in [0, FFTSIZE * M)$$

$$n \in [0, FFTSIZE * M)$$

wobei ein Wert von FFT SIZE durch ein Kommunikationssystem vorbestimmt wird, M das Interpolationsvielfache ist, $a_i$, die nullinterpolierten OFDM-Positioniersymboldaten sind, b das lokale überabgetastete Signal ist und n eine ganze Zahl ist;

wobei das Verarbeitungsmodul für eine zyklische Überabtastkorrelationsfunktionssequenz (602) ferner zum Durchführen der Erkennung der fallenden Flanke und zum Bestimmen eines Suchintervalls für die Kompensation der fallenden Flanke auf die folgende Weise konfiguriert ist:

1) wenn $x_{\text{FFTSIZE-CPSIZE}}$ < Schwellenwert 1, wobei der Schwellenwert 1 ein Rauschleistungsschwellenwert ist und die CPSIZE die Länge eins zyklischen Präfix ist,

$$L = FFTSIZE * M - CPSIZE * M;$$

ansonsten $\exists$L,$x_L \leq$ Schwellenwert 1,
für $\forall n \in$ [*FFTSIZE * M - CPSIZE * M,L*), $x_n$ > Schwellenwert 1,
$\exists k, x_k \leq$ Schwellenwert 1 und 3R, für $\forall n \in$ [*k* + 1,*k* + R), $x_n$ > Schwellenwert 1, *R* > Schwellenwert 2, für $\forall i \in$ [*L,R*), $x_k \leq$ Schwellenwert 1 und ein Wert des Schwellenwerts 2 gemäß der tatsächlichen Anwendung bestimmt wird, *T2* = [*k,FFTSIZE * M*], wobei T2 das Suchintervall für die Kompensation der fallenden Flanke ist; und
wenn *k* nicht existiert, T2 = Ø; oder

2) $\exists k, x_k \leq$ Schwellenwert 1, wobei der Schwellenwert 1 Rauschleistung ist, und für $\forall n \in$ [*k* + 1,*FFTSIZE * M*), $x_n$ > Schwellenwert 1, *T2* = [*k,FFTSIZE * M*) und T2 das Suchintervall für die Kompensation der fallenden Flanke ist; und

wenn *k* nicht existiert, T2 = Ø; oder

3)

$$k = FFTSIZE * M - \mu * CPSIZE,$$

μ ein voreingestellter Wert ist;

*T2* = [*k*,*FFTSIZE* * *M*) und T2 das Suchintervall für die Kompensation der fallenden Flanke ist;
wobei das Verarbeitungsmodul für eine zyklische Überabtastkorrelationsfunktionssequenz (602) ferner zum Durchführen der Ergänzung der steigenden Flanke auf die folgende Weise konfiguriert ist:
Löschen von Daten im Intervall *n* ∈ *T2* von $x_n n \in [0,FFTSIZE * M)$ und Versetzen der gelöschten Daten zu dem vorderen Ende der Sequenz unter Bilden der Überabtastkorrelationsfunktionssequenz $y_n n \in [0,FFTSIZE * M)$, die der Ergänzung der steigenden Flanke unterzogen wird.

6. Vorrichtung zur Messung der TDOA eines ersten Ankunftswegs nach Anspruch 5, wobei die OFDM-Positioniersymboldaten sich auf OFDM-Symboldaten in 4G und 5G beziehen, bei denen ein zyklisches Präfix (CP) entfernt wird und nur ein Positioniersignal reserviert wird;
wobei das Datenerfassungsmodul (601) zu Folgendem konfiguriert ist:
Empfangen einer Signalkonfiguration eines das Positioniersignal übertragenden Übertragungsendes, Erzeugen eines lokalen Zeitdomänesignals gemäß der Signalkonfiguration und Erzeugen des lokalen überabgetasteten Signals gemäß dem lokalen Zeitdomänesignal durch Verwenden eines Interpolationsverfahrens.

7. Vorrichtung zur Messung der TDOA eines ersten Ankunftswegs nach Anspruch 5, wobei das Schätzungsmodul (603) zu Folgendem konfiguriert ist:
Bestimmen der Ankunftszeit (time of arrival - TOA) des ersten Ankunftswegs eines Positioniersignals auf die folgende Weise:

wobei die OFDM-Positioniersymboldaten sich auf OFDM-Symboldaten in 4G und 5G beziehen, bei denen das CP entfernt wird und nur ein Positioniersignal reserviert wird;
$\exists k, x_k \leq$ Schwellenwert 1 und $\exists R$, für $\forall n \in [k + 1, k + R)$, $y_n >$ Schwellenwert 1, $R >\geq$ Schwellenwert 2 und für $\forall i \in [0,k)$, $y_k \leq$ Schwellenwert 1; und
wenn R << signaltimesize, ist die TOA des Positioniersignals ((λ + 1) + (*k* + R))/2, ansonsten ist die TOA des Positioniersignals *k* + (*signaltimesize*/2)*,* wobei signaltimesize eine Signalzeitspreizlänge einer Übertragungssignal-Zeitdomänesequenz-Autokorrelationsfunktion ist; und Durchführung der TDOA-Schätzung gemäß der erhaltenen TOA.

8. Mobiles Endgerät, umfassend:
einen Speicher, einen Prozessor und ein Verarbeitungsprogramm, das in dem Speicher gespeichert ist und durch den Prozessor ausführbar ist, wobei das Verarbeitungsprogramm, wenn es durch den Prozessor ausgeführt wird, das Verfahren zur Messung der TDOA eines ersten Ankunftswegs nach einem der Ansprüche 1 bis 4 implementiert.

9. Computerlesbares Speichermedium, das ein Verarbeitungsprogramm speichert, wobei das Verarbeitungsprogramm, wenn es durch einen Prozessor ausgeführt wird, das Verfahren zur Messung der TDOA eines ersten Ankunftswegs nach einem der Ansprüche 1 bis 4 implementiert.

**Revendications**

1. Procédé de mesure de différence de temps d'arrivée, TDOA, d'un premier chemin d'arrivée, comprenant :

l'acquisition (101), par une extrémité de réception, de données de symbole de positionnement de multiplexage par répartition orthogonale de la fréquence, OFDM ;
la génération (101), par l'extrémité de réception, d'un signal local suréchantillonné ;
l'obtention (102), par l'extrémité de réception, d'une séquence de fonction de corrélation cyclique de suréchantillonnage par calcul selon des données de symbole de positionnement OFDM et du signal suréchantillonné local, et la réalisation d'une détection de flanc arrière et d'une supplémentation de flanc avant sur la séquence de fonction de corrélation cyclique de suréchantillonnage ; et

14

la réalisation (103), par l'extrémité de réception, d'une estimation de TDOA du premier chemin d'arrivée sur la séquence de fonction de corrélation cyclique de suréchantillonnage soumise à la détection de flanc arrière et à la supplémentation de flanc avant ;

dans lequel l'obtention (102), par l'extrémité de réception, de la séquence de fonction de corrélation cyclique de suréchantillonnage par le calcul selon les données de symbole de positionnement OFDM et du signal suréchantillonné local comprend :

l'interpolation de A zéros entre chaque deux éléments adjacents de données de symbole de positionnement OFDM dans un domaine temporel pour obtenir des données de symbole de positionnement OFDM interpolées par zéro ; dans lequel A est égal à un multiple d'interpolation moins 1 ; et

l'obtention de la séquence de fonction de corrélation cyclique de suréchantillonnage $x_n$ selon la formule suivante :

$$x_n = \sum_{i=0}^{FFTSIZE\ *\ M} a_i \ast b_{(i+n)\bmod\ FFTSIZE}, \qquad i \in [0,\ FFTSIZE\ *\ M)$$

$$n \in [0,\ FFTSIZE\ *\ M)$$

dans lequel une valeur de FFTSIZE est prédéterminée par un système de communication, M est le multiple d'interpolation, $a_i$ est les données de symbole de positionnement OFDM interpolées par zéro, b est le signal suréchantillonné local et n est un nombre entier ;

dans lequel la réalisation de la détection de flanc arrière sur la séquence de fonction de corrélation cyclique de suréchantillonnage comprend la détermination d'un intervalle de recherche de compensation de flanc arrière de la manière suivante :

1) si $x_{FFTSIZE-CPSIZE}$ < Seuil 1, dans lequel le Seuil 1 est un seuil de puissance de bruit et la CPSIZE et une longueur de préfixe cyclique,

$$L = FFTSIZE\ *\ M\ -\ CPSIZE\ *\ M\ ;$$

sinon, 3L, $x_L \leq$ Seuil 1,
pour $\forall n \in [FFTSIZE\ *M\ -\ CPSIZE\ *\ M,\ L]$, $x_n$ > Seuil 1,
3k, $x_k \leq$ Seuil 1, et $\exists R$, pour $\forall n \in [k + 1,\ k + R)$, $x_n$ > Seuil 1, R > Seuil 2 , pour $\forall i \in [L,\ R)$, $x_k$ b Seuil 1, et une valeur du seuil 2 est déterminée selon l'application réelle, T2 = [k, $FFTSIZE$ * M],
T2 est l'intervalle de recherche de compensation de flanc arrière ; et
si $k$ n'existe pas, T2=Ø ; ou

2) $\exists k$, $x_k \leq$ Seuil 1, dans lequel le seuil 1 est la puissance du bruit, et pour $\forall n \in [k + 1,\ FFTSIZE\ *\ M)$, $x_n$ > Seuil 1, $T2 = [k,\ FFTSIZE\ *\ M)$, et T2 est l'intervalle de recherche de compensation de flanc arrière ; et
si $k$ n'existe pas, T2=Ø ; ou
3)

$$k = FFTSIZE\ *\ M\ -\ \mu\ *\ CPSIZE,$$

$\mu$ est une valeur prédéfinie ;
$T2 = [k,\ FFTSIZE\ *\ M)$, et T2 est l'intervalle de recherche de compensation de flanc arrière ;
dans lequel la réalisation de la supplémentation de flanc avant sur la séquence de fonction de corrélation cyclique de suréchantillonnage comprend :
la traduction de données dans l'intervalle de recherche de compensation de flanc arrière vers une extrémité avant de la séquence de fonction de corrélation cyclique de suréchantillonnage, dans lequel la traduction comprend :
la suppression de données dans l'intervalle n E $T2$ de $x_n$ $n \in [0,\ FFTSIZE\ *\ M)$, et la transplantation des données supprimées vers l'extrémité avant de la séquence pour former la séquence de fonction de corrélation cyclique de suréchantillonnage $y_n$ $n \in [0,\ FFTSIZE\ *\ M)$ soumise à la supplémentation du flanc avant.

**2.** Procédé de mesure de TDOA d'un premier chemin d'arrivée selon la revendication 1, dans lequel les données de symbole de positionnement OFDM font référence à des données de symbole OFDM en 4G et 5G dans lesquelles un préfixe cyclique, CP, est retiré et seul un signal de positionnement est réservé ;
la génération (101), par l'extrémité de réception, du signal local suréchantillonné comprend :
la réception, par l'extrémité de réception, d'une configuration de signal d'une extrémité de transmission transmettant le signal de positionnement, la génération d'un signal de domaine temporel local selon la configuration de signal, et la génération du signal suréchantillonné local selon le signal de domaine temporel local à l'aide d'un procédé d'interpolation.

**3.** Procédé de mesure de TDOA d'un premier chemin d'arrivée selon la revendication 2, dans lequel la configuration du signal de l'extrémité de transmission transmettant le signal de positionnement comprend un paramètre utilisé par l'extrémité de transmission pour générer le signal de positionnement ; et le signal de domaine temporel local est une séquence de signal de transmission de domaine temporel qui est identique à une séquence de signal de transmission dans le domaine temporel au niveau de l'extrémité de transmission et générée localement par l'extrémité de réception selon la configuration du signal.

**4.** Procédé de mesure de TDOA d'un premier chemin d'arrivée selon la revendication 1, dans lequel la réalisation d'une estimation de TDOA du premier chemin d'arrivée comprend :
la détermination du temps d'arrivée, TOA, du premier chemin d'arrivée d'un signal de positionnement de la manière suivante :

dans lequel les données de symbole de positionnement OFDM font référence à des données de symboles OFDM en 4G et 5G dans lesquelles le CP est retiré et seul le signal de positionnement est réservé ;
3k, $x_k \leq$ Seuil 1 et 3R, pour $\forall n \in [k + 1, k + R)$, $y_n >$ Seuil 1, $R >\geq$ Seuil 2, et pour $\forall i \in [0, k)$, $y_k \leq$ Seuil 1 ; et si R « signaltimesize, le TOA du signal de positionnement est $((k + 1) + (k + R))/2$, sinon, le TOA du signal de positionnement est $k + (signaltimesize/2)$, dans lequel signaltimesize est une longueur d'étalement temporel de signal d'une fonction d'autocorrélation de séquence dans le domaine temporel de signal de transmission ; et la réalisation de l'estimation de TDOA selon le TOA obtenu.

**5.** Appareil de mesure de la différence de temps d'arrivée, TDOA, d'un premier chemin d'arrivée, comprenant :

un module d'acquisition de données (601), qui est configuré pour acquérir des données de symbole de positionnement de multiplexage par répartition orthogonale de la fréquence, OFDM, et générer un signal local suréchantillonné ;
un module de traitement de séquence de fonction de corrélation cyclique de suréchantillonnage (602), qui est conçu pour obtenir une séquence de fonction de corrélation cyclique de suréchantillonnage par calcul selon les données de symbole de positionnement OFDM et le signal suréchantillonné local, et effectuer une détection de flanc arrière et une supplémentation de flanc avant sur la séquence de fonction de corrélation cyclique de suréchantillonnage ; et
un module d'estimation (603), qui est conçu pour réaliser une estimation de TDOA du premier chemin d'arrivée sur la séquence de fonction de corrélation cyclique de suréchantillonnage soumise à la détection de flanc arrière et à la supplémentation de flanc avant ;
dans lequel le module de traitement de séquence de fonction de corrélation cyclique de suréchantillonnage (602) est conçu pour obtenir la séquence de fonction de corrélation cyclique de suréchantillonnage de la manière suivante :

l'interpolation de A zéros entre chaque deux éléments adjacents de données de symbole de positionnement OFDM dans un domaine temporel pour obtenir des données de symbole de positionnement OFDM interpolées par zéro ; dans lequel A est égal à un multiple d'interpolation moins 1 ; et
l'obtention de la séquence de fonction de corrélation cyclique de suréchantillonnage $x_n$ selon la formule suivante :

$$x_n = \sum_{i=0}^{FFTSIZE\ *\ M} a_i {}^* b_{(i+n)mod\ FFTSIZE},\qquad i \in [0,\ FFTSIZE\ *\ M)$$

$$n \in [0,\ FFTSIZE\ *\ M)$$

dans lequel une valeur de FFT SIZE est prédéterminée par un système de communication, M est le multiple d'interpolation, $a_i$ est les données de symbole de positionnement OFDM interpolées par zéro, b est le signal suréchantillonné local et n est un nombre entier ;

dans lequel le module de traitement de séquence de fonction de corrélation cyclique de suréchantillonnage (602) est en outre conçu pour réaliser la détection de flanc arrière et déterminer un intervalle de recherche de compensation de flanc arrière de la manière suivante :

1) si $x_{FFTSIZE-CPSIZE}$ < Seuil 1, où le seuil 1 est un seuil de puissance de bruit et la CPSIZE et une longueur de préfixe cyclique,

$$L = FFTSIZE\ *\ M\ -\ CPSIZE\ *\ M\ ;$$

sinon, $\exists L$, $x_L \leq$ Seuil 1,
pour $\forall n \in [FFTSIZE * M - CPSIZE * M, L]$, $x_n$ > Seuil 1,
$\exists k$, $x_k \leq$ Seuil 1, et $\exists R$, pour $\forall n \in [k + 1, k + R)$, $x_n$ > Seuil 1, $R$ > Seuil 2, pour $\forall i \in [L, R)$, $x_k \leq$ Seuil 1, et une valeur du seuil 2 est déterminée selon l'application réelle, T2 = $[k, FFTSIZE * M]$, T2 est l'intervalle de recherche de compensation de flanc arrière ; et
si $k$ n'existe pas, T2=Ø ; ou

2) $\exists k$, $x_k \leq$ Seuil 1, où le seuil 1 est la puissance du bruit, et pour $\forall n \in [k + 1, FFTSIZE * M)$, $x_n$ > Seuil 1, $T2 = [k, FFTSIZE * M)$, et T2 est l'intervalle de recherche de compensation de flanc arrière ; et
si $k$ n'existe pas, T2= Ø ; ou
3)

$$k = FFTSIZE\ *\ M\ -\ \mu\ *\ CPSIZE,$$

$\mu$ est une valeur prédéfinie ;
$T2 = [k, FFTSIZE * M)$, et T2 est l'intervalle de recherche de compensation de flanc arrière ;
dans lequel le module de traitement de séquence de fonction de corrélation cyclique de suréchantillonnage (602) est en outre conçu pour réaliser la supplémentation de flanc avant de la manière suivante :
la suppression de données dans l'intervalle n E $T2$ de $x_n n \in [0, FFTSIZE * M)$, et la transplantation des données supprimées vers l'extrémité avant de la séquence pour former la séquence de fonction de corrélation cyclique de suréchantillonnage $y_n n \in [0, FFTSIZE * M)$ soumise à la supplémentation de flanc avant.

6. Appareil de mesure de TDOA d'un premier chemin d'arrivée selon la revendication 5, dans lequel les données de symbole de positionnement OFDM font référence à des données de symbole OFDM en 4G et 5G dans lesquelles un préfixe cyclique, CP, est retiré et seul un signal de positionnement est réservé ;
le module d'acquisition de données (601) est conçu pour :
recevoir une configuration de signal d'une extrémité de transmission transmettant le signal de positionnement, générer un signal de domaine temporel local selon la configuration de signal, et générer le signal suréchantillonné local selon le signal de domaine temporel local à l'aide d'un procédé d'interpolation.

7. Appareil de mesure de TDOA d'un premier chemin d'arrivée selon la revendication 5, dans lequel le module d'estimation (603) est conçu pour :
déterminer l'heure d'arrivée, TOA, du premier chemin d'arrivée d'un signal de positionnement de la manière suivante :

dans lequel les données de symbole de positionnement OFDM font référence à des données de symboles OFDM en 4G et 5G dans lesquelles le CP est retiré et seul le signal de positionnement est réservé ;
$\exists k$, $x_k \leq$ Seuil 1 et $\exists R$, pour $\forall n \in [k + 1, k + R)$, $y_n >$ Seuil 1, $R \geq$ Seuil 2, et pour $\forall i \in [0, k)$, $y_k \leq$ Seuil 1 ; et si R « signaltimesize, le TOA du signal de positionnement est $((k + 1) + (k + R))/2$, sinon, le TOA du signal de positionnement est $k + (signaltimesize /2)$, dans lequel signaltimesize est une longueur d'étalement temporel de signal d'une fonction d'autocorrélation de séquence dans le domaine temporel de signal de transmission ; et la réalisation de l'estimation de TDOA selon le TOA obtenu.

8. Terminal mobile, comprenant :
une mémoire, un processeur et un programme de traitement stocké dans la mémoire et pouvant être exécuté par le processeur, dans lequel le programme de traitement, lorsqu'il est exécuté par le processeur, met en oeuvre le procédé de mesure de TDOA d'un premier chemin d'arrivée selon l'une quelconque des revendications 1 à 4.

9. Support de stockage lisible par ordinateur stockant un programme de traitement, dans lequel le programme de traitement, lorsqu'il est exécuté par un processeur, met en oeuvre le procédé de mesure de TDOA d'un premier chemin d'arrivée selon l'une quelconque des revendications 1 à 4.

101 — A receiving end acquires orthogonal frequency division multiplexing (OFDM) positioning symbol data, and generates a local oversampled signal

102 — The receiving end calculates an oversampling cyclic correlation function sequence according to the OFDM positioning symbol data and the local oversampled signal, and performs trailing edge detection and leading edge supplementation on the oversampling cyclic correlation function sequence

103 — The receiving end estimates TDOA of the first arrival path based on the oversampling cyclic correlation function sequence subjected to the trailing edge detection and the leading edge supplementation

FIG. 1

201 — Receive a positioning signal and obtain OFDM positioning symbol data

202 — Generate a local time domain signal according to configuration of a transmitting end that transmits the positioning signal, and generate a local oversampled signal by means of 16 times interpolation

203 — Perform mathematical correlation calculation on the OFDM positioning symbol data in the positioning signal and the local oversampled signal to obtain an oversampling cyclic correlation function sequence

204 — Perform trailing edge detection on the oversampling cyclic correlation function sequence

205 — Perform leading edge supplementation on the oversampling cyclic correlation function sequence

206 — Perform time of arrival (TOA) estimation

207 — Perform TOA estimation on multiple signals from the transmitting end, calculate a TOA difference, and obtain TDOA estimation

FIG. 2

FIG. 3A

OFDM symbol

FIG. 3B

OFDM symbol

FIG. 3C

```
401 ──┐  ┌──────────────────────────────────────────────┐
       └──│  Receive a positioning signal and acquire OFDM │
          │            positioning symbol data             │
          └──────────────────────────────────────────────┘
```

| | |
|---|---|
| 401 | Receive a positioning signal and acquire OFDM positioning symbol data |
| 402 | Generate a local time domain signal according to configuration of a transmitting end that transmits the positioning signal, and perform 16 times interpolation to generate a local oversampled signal |
| 403 | Perform mathematical correlation calculation on the OFDM positioning symbol data in the positioning signal and the local oversampled signal to obtain an oversampling cyclic correlation function sequence |
| 404 | Perform trailing edge detection on the oversampling cyclic correlation function sequence |
| 405 | Perform leading edge supplementation on the oversampling cyclic correlation function sequence, and copy the segment BC to the segment EF by referring to FIG. 3b |
| 406 | Perform time of arrival (TOA) estimation |
| 407 | Perform TOA estimation on multiple signals from the transmitting end, calculate a TOA difference, and obtain TDOA estimation |

FIG. 4

```
501 ──┐  ┌──────────────────────────────────────────────┐
       │  │  Receive a positioning signal and acquire OFDM │
       └──┤  positioning symbol data                        │
          └──────────────────────────────────────────────┘
                              │
                              ▼
502 ──┐  ┌──────────────────────────────────────────────┐
       │  │  Generate a local time domain signal according to │
       └──┤  configuration of a transmitting end that transmits the │
          │  positioning signal, and perform 16 times interpolation to │
          │  generate a local oversampled signal            │
          └──────────────────────────────────────────────┘
                              │
                              ▼
503 ──┐  ┌──────────────────────────────────────────────┐
       │  │  Perform mathematical correlation calculation on the │
       └──┤  OFDM positioning symbol data in the positioning signal │
          │  and the local oversampled signal to obtain an │
          │  oversampling cyclic correlation function sequence │
          └──────────────────────────────────────────────┘
                              │
                              ▼
504 ──┐  ┌──────────────────────────────────────────────┐
       │  │  Perform trailing edge detection on the oversampling │
       └──┤  cyclic correlation function sequence           │
          └──────────────────────────────────────────────┘
                              │
                              ▼
505 ──┐  ┌──────────────────────────────────────────────┐
       │  │  Perform leading edge supplementation on the    │
       └──┤  oversampling cyclic correlation function sequence, and │
          │  copy the segment AC to the segment HF by referring to │
          │  FIG. 3c                                         │
          └──────────────────────────────────────────────┘
                              │
                              ▼
506 ──┐  ┌──────────────────────────────────────────────┐
       │  │  Perform time of arrival (TOA) estimation       │
       └──┤                                                 │
          └──────────────────────────────────────────────┘
                              │
                              ▼
507 ──┐  ┌──────────────────────────────────────────────┐
       │  │  Perform TOA estimation on multiple signals from the │
       └──┤  transmitting end, calculate a TOA difference, and obtain │
          │  TDOA estimation                                │
          └──────────────────────────────────────────────┘
```

FIG. 5

601 — Data acquisition module

602 — Oversampling cyclic correlation function sequence processing module

603 — Estimation module

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3125483 A1

- CN 103163386 A